# EUROPEAN PATENT SPECIFICATION

(11) **EP 1 624 506 B1**
(45) Date of publication and mention of the grant of the patent: **16.10.2013**
(21) Application number: 05106435.0
(22) Date of filing: 14.07.2005
(51) Int. Cl.: H01M 2/10

(54) **Uninterruptible power supply**
Unterbrechungsfreie Stromversorgung
Alimentation electrique sans coupure

(30) Priority: 06.08.2004 IT MO20040206
(43) Date of publication of application: 08.02.2006
(73) Proprietor: Bticino S.p.A., 20154 Milano (IT)
(72) Inventor: Simonazzi, Giuseppe, 42100 Reggio Emilia (IT)
(74) Representative: Brunacci, Marco

(56) References cited:
- EP-A- 1 548 912
- WO-A-01/76001
- US-A1- 2002 136 042

## Description

The present invention relates to an uninterruptible power supply for accumulation and emergency supply of electric power.

It is known that uninterruptible power supplies (UPS) are devices capable of supplying electric power to connected user devices when the main power supply line fails.

This power is generally supplied by batteries, which are mutually connected in series or in parallel and in which the voltage is adapted and transformed from DC, as supplied by said batteries, into AC, as required by normal user devices, by means of an electric current transfer and management unit, which is functionally interposed between the main electric line and the user devices to be supplied.

The batteries are normally inactive and supply power only if the power supply line fails or fluctuates excessively, and can optionally be recharged from said main line if it is active.

Whereas for low-power uninterruptible power supplies the DC voltage of the batteries is usually limited to between 12 and 48 V, which correspond to a series of 1 to 4 12-V batteries, in higher-power UPS units there is a trend to increase the DC voltage, since the higher the vaulted, the higher the efficiency of the conversion from DC to AC, because the currents involved are lower for an equal power level; in these cases, the voltage that is used, obtained from a plurality of batteries in series, can even reach a few hundred volts.

In general, batteries are mounted on particular movable caddies, which are provided with a connecting element by means of which they can be connected to the transfer and management unit.

These conventional uninterruptible power supplies are not free from drawbacks, including the fact that the handling of the batteries with which they are provided, during their installation and maintenance, does not always occur in a practical and easy way and/or in conditions of absolute safety.

In particular, in higher-power uninterruptible power supplies, since considerably high voltages are involved, the operator assigned to installing and maintaining the batteries must work with particular attention and care in order to avoid contacts with parts that are at a dangerous voltage.

Moreover, the person who performs these interventions is often forced to take particular precautions, such as for example the use of rubber gloves, shoes with insulating soles, et cetera, and often cannot be an inexpert user but must instead be specialized, with labor costs that are certainly not negligible.

The aim of the present invention is to eliminate the drawbacks noted above of the background art, by providing an uninterruptible power supply unit for accumulation and emergency supply of electric power that allows to reach particularly high DC voltages during operation and at the same time allows to perform installation and maintenance operations practically, easily and in such safety conditions that they can be performed even by unqualified personnel.

Within this aim, an object of the present invention is to provide a structure that is simple, relatively easy to provide in practice, safe in use, effective in operation, and has a relatively low cost.

This aim and this and other objects that will become better apparent hereinafter are achieved by the present uninterruptible power supply unit for accumulation and emergency supply of electric power, which comprises a supporting frame for an electric current transfer and management unit, and at least one power supply caddy, which can be associated with said frame and is provided with at least one first and one second set of electric batteries, which can be coupled electrically to said unit, characterized in that said caddy comprises at least one first element for the electronic connection of said first set and at least one second element for the electronic connection of said second set in order to transmit electric power from said caddy.

Further characteristics and advantages of the present invention will become better apparent from the following detailed description of a preferred but not exclusive embodiment of an uninterruptible power supply for accumulation and emergency supply of electric power, illustrated by way of non-limiting example in the accompanying drawings, wherein:
Figure 1 is a schematic partial perspective view of a possible embodiment of the uninterruptible power supply according to the invention;
Figure 2 is a perspective view, taken from another angle, of the uninterruptible power supply of Figure 1;
Figure 3 is a schematic and partial perspective view of an alternative embodiment of the uninterruptible power supply according to the invention;
Figure 4 is a perspective view, taken from another angle, of the uninterruptible power supply of Figure 3.

With reference to the figures, the reference numeral 1 generally designates an uninterruptible power supply for accumulation and emergency supply of electric power.

The uninterruptible power supply 1 comprises a frame 2, which supports a unit for transferring and managing electric current, which is not shown in detail in the figures and can be coupled electrically to an electric power source, such as the ordinary domestic or industrial electric mains, and to one or more user devices, such as for example an electronic computer and the associated peripherals.

Further, the uninterruptible power supply 1 is provided with at least one and preferably a plurality of power supply caddies 3, which are mostly shaped like parallelepipeds which can be associated with the frame 2.

The caddies 3 are provided with at least one first set 4 of electric batteries and with at least one second set 5 of electric batteries, which are rechargeable, have a voltage of 12 V and can be coupled electrically to the transfer and management unit.

According to the invention, each caddy 3 comprises at least one first element 6 for the electronic connection of the first set 4 and at least one second element 7 for the electronic connection of the second set 5, by means of which it is possible to transmit the electric power that arrives from outside the caddy and is intended to recharge the batteries and the energy that is directed outward and is intended to supply power, in case of emergency, to the connected user devices.

Conveniently, each set 4 and 5 is provided with a plurality of batteries, which are associated in series respectively with the first element 6 and with the second element 7, the total potential difference across each series being lower than 50 V.

In the particular embodiments of the present invention shown in the figures, there are five batteries for each caddy 3: three are part of the first set 4, which has a total voltage of 36 V, and two constitute the second set 5, which instead has a total potential difference of 24 V.

However, alternative embodiments of the uninterruptible power supply 1 are also possible in which each caddy 3 is provided with three or more sets of batteries, each constituted by a different number of batteries (possibly even a single one) and is connected to a corresponding connecting element.

The frame 2 comprises at least one first transmission port 8 and at least one second transmission port 9, which are connected electrically to the transfer and management unit and are suitable to couple respectively to the first element 6 and to the second element 7 during the mounting of a corresponding caddy 3 on the frame 2.

Advantageously, the transfer and management unit is provided with means for the electronic connection of the ports 8 and 9, which are intended to connect electrically in series or in parallel the first set 4 and the second set 5 once the caddy 3 has been mounted on the frame 2.

In this manner, only when the caddy 3 is completely inserted and accommodated within the frame 2 it becomes possible to constitute for example a series of five batteries, the total potential difference of which reaches 60 V.

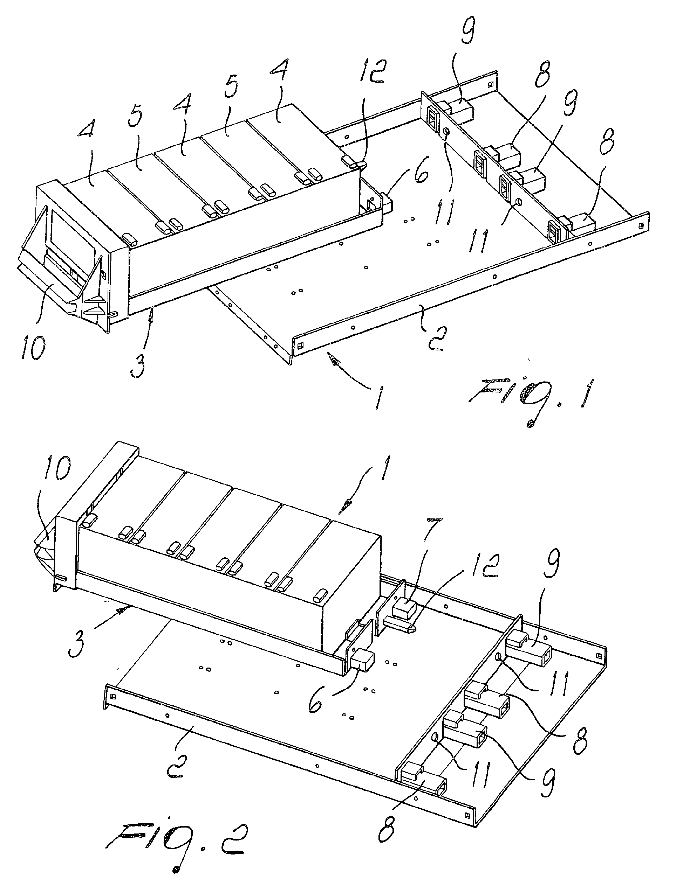

In a first embodiment of the present invention, shown in Figures 1 and 2, the elements 6 and 7 are formed on a side of the corresponding caddy 3, which is further provided with grip means such as a handle 10 arranged on the opposite side.

In Figures 1 and 2, only the portion of the frame 2 that is designed to accommodate the caddies 3 has been shown; such portion is provided with two pairs of ports 8 and 9, which can be engaged by the elements 6 and 7 of two separate caddies 3.

The coupling between the elements 6 and 7 and the ports 8 and 9 is of the male-female type; in this first embodiment, for example, the elements 6 and 7 are constituted by corresponding male portions and the ports 8 and 9 are constituted by female portions.

The uninterruptible power supply 1 shown in Figures 1 and 2 is further provided with abutment and centering means for mounting the caddies 3 on the frame 2; such means are constituted advantageously by two slots 11 formed on the frame 2 and by a pin 12, which is associated with each caddy 3 and can be inserted substantially snugly in a corresponding slot 11.

The pin 12 of each caddy 3, in particular, is arranged on the same side as the elements 6 and 7, from which it is spaced by a distance equal to the distance between the slot 11 and the corresponding ports 8 and 9; the insertion of the pin 12 in the slot 11 in practice is such as to align correctly the elements 6 and 7 with the ports 8 and 9.

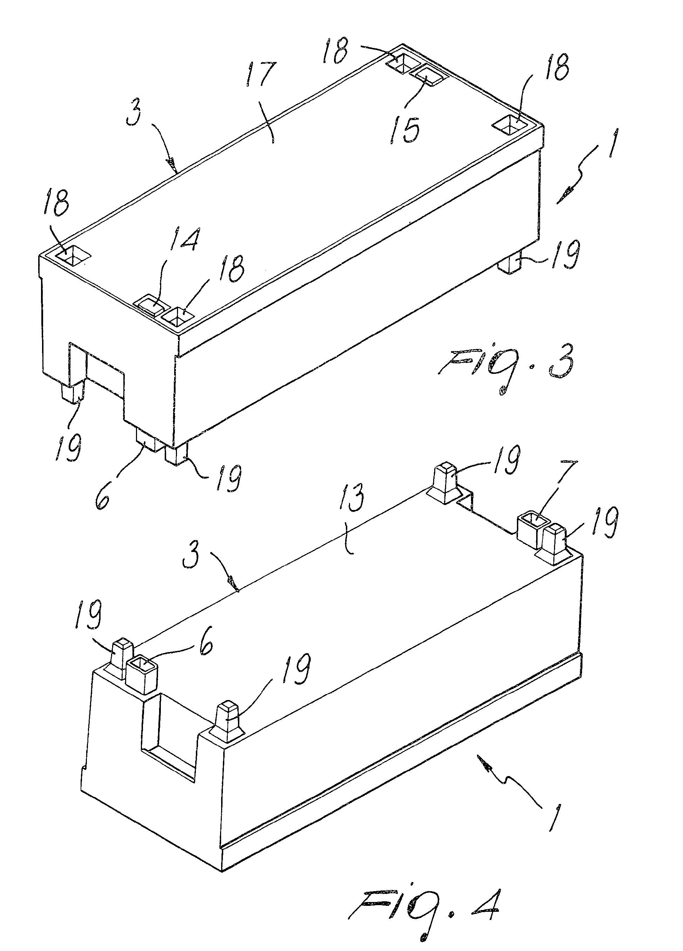

In this first embodiment, each caddy 3 can be mounted/removed individually on/from the frame 2; in a second embodiment of the present invention, shown in Figures 3 and 4, the caddies 3 can instead be connected to each other in a modular fashion.

In this second embodiment, in particular, the elements 6 and 7 of the caddies 3 are formed on the lower surfaces 13 thereof and the batteries to which they are connected are not shown in detail in the figures.

Further, each caddy 3 comprises first and second additional transmission ports, designated respectively by the reference numerals 14 and 15 and formed on the upper surface 17 thereof; such additional ports are suitable to mate respectively with the first and second elements 6 and 7 of another caddy arranged above said caddy.

The caddies 3 are in fact designed to be stacked one above the other, and for this purpose they are provided with appropriate coupling means, which comprise a plurality of slots 18, formed on the upper surfaces 17, and a plurality of protruding bodies 19, which protrude from the lower surfaces 13. The protruding bodies 19 of one caddy 3 in practice are suitable to engage within the slots 18 of the underlying caddy 3 and to accordingly prevent lateral movements which might cause their uncoupling.

Figures 3 and 4 do not illustrate the frame 2 of this embodiment; such frame is provided with a footing, which is provided with the ports 8 and 9 which can be engaged by the elements 6 and 7 of one of the caddies 3, and the other caddies can be stacked above said caddy and placed electrically in contact with the transfer and management unit by means of the additional transmission ports 14 and 15.

In this embodiment, the frame 2 can be provided with recesses which are similar to the slots 18 of the caddies 3, and such recesses can be engaged by the protruding bodies 19 of the caddies so as to constitute abutment and centering means which are similar to the ones described and illustrated earlier.

Finally, the coupling between the elements 6 and 7 and the ports 8 and 9, as well as the coupling between such elements and the additional transmission ports 14 and 15, is of the male-female type; in this second embodiment, in particular, the elements 6 and 7 are formed by female portions, which protrude from the lower surfaces 13 of the caddies 3, while the ports 8 and 9 and the additional transmission ports 14 and 15 are constituted by corresponding male portions.

In practice it has been found that the described invention achieves the proposed aim and object, and in particular the fact is stressed that by providing each caddy with two sets of batteries with substantially limited total potential differences, anyone, i.e., even an inexpert user and not necessarily just qualified personnel, is allowed to perform operations within the uninterruptible power supply.

Further, it is noted that the present invention allows to arrange in a compact and rational manner, on a limited number of caddies, the batteries required to achieve a preset power level and a preset operating duration.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

The disclosures in Italian Patent Application No. MO2004A000206 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An uninterruptible power supply (1) for accumulation and emergency supply of electric power, comprising
a supporting frame (2) for an electric current transfer and management unit, and
at least one power supply caddy (3), which can be associated with said frame (2) and is provided with at least one first set (4) and one second set (5) of electric batteries, which can be coupled electrically to said unit, said caddy (3) comprising, at least one first electronic connection element (6) for the electronic connection of said first set (4) and at least one second electronic connection element (7) for the electronic connection of said second set (5) in order to transmit electric power from said caddy (3),
wherein said first set comprises a plurality of batteries (4) which are associated in series with said first electronic connection elements (6), and said second set comprises a plurality of batteries (5) which are associated in series with said second electronic connection element (7), and
wherein said frame (2) comprises at least one first (8) and one second transmission port (9), which are connected electrically to said unit and are suitable to couple respectively to said first (6) and second (7) electronic connection elements during the mounting of said caddy (3) on said frame.

2. The uninterruptible power supply (1) according to claim 1, **characterized in that** said unit comprises means for electronic connection of said first (8) and second (9) transmission ports which are suitable to connect electrically in series or in parallel said first and second sets of batteries (4, 5) during the mounting of said caddy (3) on said frame (2).

3. The uninterruptible power supply according to one or more of the preceding claims, **characterized in that** said caddy (3) is provided with five batteries, which can be divided between said first set (4) and said second set (5), said connection means being suitable to connect electrically in series or in parallel said first (4) and second set (5) during the mounting of said caddy (3) on said frame (2).

4. The uninterruptible power supply according to one or more of the preceding claims, **characterized in that** the total potential difference across each set of batteries is substantially lower than 50 V.

5. The uninterruptible power supply according to one or more of the preceding claims, **characterized in that** the coupling between said electronic connection elements (6, 7) and said transmission ports (8, 9) is of the male-female type, said electronic connection elements (6, 7) comprising corresponding male portions and said transmission ports (8, 9) comprising corresponding female portions or vice versa.

6. The uninterruptible power supply (1) according to one or more of the-preceding claims, **characterized in that** it comprises abutment and centering means (11, 12) for mounting said caddy (3) on said frame (2).

7. The uninterruptible power supply according to claim 6, **characterized in that** said abutment and centering means comprise at least one slot (11), which is formed on said caddy (3) or on said frame (2), and at least one pin (12), which is associated with said frame (2) or respectively with said caddy (3) and can be inserted substantially snugly in said slot (11).

8. The uninterruptible power supply according to one or more of the preceding claims, **characterized in that** said caddy (3) comprises a grip means (10).

9. The uninterruptible power supply according to claim 8,
**characterized in that** said grip means comprise at least one handle (10).

10. The uninterruptible power supply (1) according to one or more of the preceding claims, **characterized in that** it comprises a plurality of said caddies (3).

11. The uninterruptible power supply according to claim 10, **characterized in that** said electronic connection elements (6, 7) are formed on a side of the corresponding caddy (3).

12. The uninterruptible power supply according to claim 10, **characterized in that** said electronic connection elements (6, 7) are formed on the lower surface (13) of the corresponding caddy (3).

13. The uninterruptible power supply according to claim 12, **characterized in that** each one (3) of said caddies comprises at least one first (14) and one second (15) additional transmission port, which are formed on the upper surface (17) of said caddy (3) and are suitable to couple respectively with the first (6) and second (7) electronic connection element of another caddy stacked above it.

14. The uninterruptible power supply according to claim 13, **characterized in that** the coupling between said electronic connection elements (6, 7) and said additional transmission ports (14, 15) is of the male-female type, said connection elements (6, 7) comprising corresponding male portions and said additional transmission ports (14, 15) comprising corresponding female portions, or vice versa.

15. The uninterruptible power supply according to claim 10, **characterized in that** said caddies (3) comprise coupling means (18, 19) which are suitable to allow their mutual stacking.

16. The uninterruptible power supply according to claim 15, **characterized in that** said coupling means comprise at least one slot (18), which is formed on the upper surface or the lower surface of each caddy (3), and at least one protruding body (19), which is formed respectively on the lower or upper surface of the same caddy, the protruding body (19) of one caddy being suitable to engage within the slot (18) of another caddy stacked with it.

17. - A power supply caddy (3) for uninterruptible power supplies, comprising
at least one first (4) and one second set (5) of electric batteries, which can be coupled electrically to an uninterruptible power supply (1), and
at least one first electronic connection element (6) for the electronic connection of said first set (4), and at least one second electronic connection element (7) for the electronic connection of said second set (5), for the transmission of electric power arriving from outside and directed outward to said uninterruptible power supply (1),
wherein said first set comprises a plurality of batteries (4) which are associated in series with said first electronic connection element (6), and said second set comprises a plurality of batteries (5) which are associated in series with said second electronic connection element (7).

18. The caddy according to claim 17, **characterized in that** the total potentiel difference across each set of batteries (4, 5) is substantially lower than 50 V, said first (4) and second (5) sets being suitable to be connected electrically to each other in series or in parallel once they have been coupled to said uninterruptible power supply (1).

19. The caddy according to claim 18, **characterized in that** the total potential difference across said first and second sets of batteries (4, 5), when connected electrically to each other; is substantially higher than 50 V.

## Patentansprüche

1. Unterbrechungsfreie Stromversorgung (1) zur Speicherung von und Notversorgung mit elektrischer Energie, mit
einem Stützrahmen (2) für eine elektrische Stromübertragungs- und Managementeinheit, und
wenigstens einem Stromversorgungsbehälter (3), welcher mit dem Rahmen (2) verbunden werden kann und mit wenigstens einem ersten Satz (4) und einem zweiten Satz (5) elektrischer Batterien versehen ist, welche elektrisch mit der Einheit gekoppelt werden können, wobei der Behälter (3) umfasst wenigstens ein erstes elektronisches Anschlusselement (6) für den elektronischen Anschluss des ersten Satzes (4) und wenigstens ein zweites elektronisches Anschlusselement (7) für den elektronischen Anschluss des zweiten Satzes (5), um elektrischen Strom vom Behälter (3) zu übertragen,
wobei der erste Satz eine Mehrzahl von Batterien (4) umfasst, welche in Reihe mit dem ersten elektronischen Anschlusselement (6) verbunden sind, und der zweite Satz eine Mehrzahl von Batterien (5) umfasst, welche mit dem zweiten elektronischen Anschlusselement (7) in Reihe verbunden sind, und
wobei der Rahmen (2) wenigstens einen ersten (8) und einen zweiten Übertragungsport (9) umfasst, welche elektrisch mit der Einheit verbunden sind und geeignet sind, sich während der Halterung des Behälters (3) auf dem Rahmen jeweils mit dem ersten (6) und dem zweiten (7) elektronischen Anschlusselement zu koppeln.

2. Unterbrechungsfreie Stromversorgung (1) nach Anspruch 1, **dadurch gekennzeichnet, dass** die Einheit Mittel zum elektronischen Anschluss des ersten (8) und des zweiten (9) Übertragungsports umfasst, welche dazu geeignet sind, den ersten und zweiten Satz Batterien (4, 5) während der Halterung des Behälters (3) auf dem Rahmen (2) elektrisch in Reihe oder parallel zu verbinden.

3. Unterbrechungsfreie Stromversorgung nach ein oder mehreren der vorstehenden Ansprüche, **dadurch gekennzeichnet, dass** der Behälter (3) mit fünf Batterien versehen ist, welche zwischen dem ersten Satz (4) und dem zweiten Satz (5) aufgeteilt sein können, wobei die Anschlusseinrichtung geeignet ist, den ersten Satz (4) und den zweiten Satz (5) während der Halterung des Behälters (3) auf dem Rahmen (2) elektrisch in Reihe oder parallel zu verbinden.

4. Unterbrechungsfreie Stromversorgung nach ein oder mehreren der vorstehenden Ansprüche, **dadurch gekennzeichnet, dass** die gesamte Potenzialdifferenz über jeden Satz Batterien im Wesentlichen weniger als 50 V beträgt.

5. Unterbrechungsfreie Stromversorgung nach ein oder mehreren der vorstehenden Ansprüche, **dadurch gekennzeichnet, dass** das Kuppeln zwischen den elektronischen Anschlusselementen (6, 7) und den Übertragungsports (8, 9) in männlicher/weiblicher Bauart erfolgt, wobei die elektronischen Anschlusselemente (6, 7) korrespondierende männliche Abschnitte umfassen und die Übertragungsports (8, 9) korrespondierende weibliche Abschnitte umfassen oder umgekehrt.

6. Unterbrechungsfreie Stromversorgung (1) nach ein oder mehreren der vorstehenden Ansprüche, **dadurch gekennzeichnet, dass** diese eine Anstoß- und Zentrierungseinrichtung (11, 12) zum Montieren des Behälters (3) auf dem Rahmen (2) umfasst.

7. Unterbrechungsfreie Stromversorgung nach Anspruch 6, **dadurch gekennzeichnet, dass** die Anstoß- und Zentrierungseinrichtung wenigstens einen Schlitz (11) umfasst, welcher auf dem Behälter (3) oder auf dem Rahmen (2) ausgebildet ist, und wenigstens einen Stift (12), welcher mit dem Rahmen (2) bzw. mit dem Behälter (3) verbunden ist und in den Schlitz (11) im Wesentlichen passgenau eingesetzt werden kann.

8. Unterbrechungsfreie Stromversorgung nach ein oder mehreren der vorstehenden Ansprüche, **dadurch gekennzeichnet, dass** der Behälter (3) eine Griffeinrichtung (10) umfasst.

9. Unterbrechungsfreie Stromversorgung nach Anspruch 8, **dadurch gekennzeichnet, dass** die Griffeinrichtung wenigstens einen Handgriff (10) umfasst.

10. Unterbrechungsfreie Stromversorgung (1) nach ein oder mehreren der vorstehenden Ansprüche, **dadurch gekennzeichnet, dass** diese eine Mehrzahl von Behältern (3) umfasst.

11. Unterbrechungsfreie Stromversorgung nach Anspruch 10, **dadurch gekennzeichnet, dass** die elektronischen Anschlusselemente (6, 7) auf einer Seite des korrespondierenden Behälters (3) ausgebildet sind.

12. Unterbrechungsfreie Stromversorgung nach Anspruch 10, **dadurch gekennzeichnet, dass** die elektronischen Anschlusselemente (6, 7) auf der unteren Oberfläche (13) des korrespondierenden Behälters (3) ausgebildet sind.

13. Unterbrechungsfreie Stromversorgung nach Anspruch 12, **dadurch gekennzeichnet, dass** jeder (3) der Behälter wenigstens einen ersten (14) und einen zweiten (15) zusätzlichen Übertragungsport umfasst, welche auf der oberen Oberfläche (17) des Behälters (3) ausgebildet sind und dazu geeignet sind, sich jeweils mit dem ersten (6) und dem zweiten (7) elektronischen Anschlusselement eines weiteren, über diesem gestapelten Behälters zu koppeln.

14. Unterbrechungsfreie Stromversorgung nach Anspruch 13, **dadurch gekennzeichnet, dass** das Koppeln zwischen den elektronischen Anschlusselementen (6, 7) und den zusätzlichen Übertragungsports (14, 15) in männlicher/weiblicher Bauart erfolgt, wobei die Anschlusselemente (6, 7) korrespondierende männliche Abschnitte umfassen und die zusätzlichen Übertragungsports (14, 15) korrespondierende weibliche Abschnitte umfassen, oder umgekehrt.

15. Unterbrechungsfreie Stromversorgung nach Anspruch 10, **dadurch gekennzeichnet, dass** die Behälter (3) Kupplungselemente (18, 19) umfassen, die dazu geeignet sind, ihre wechselseitige Stapelung zu erlauben.

16. Unterbrechungsfreie Stromversorgung nach Anspruch 15, **dadurch gekennzeichnet, dass** die Kupplungseinrichtung wenigstens aufweist einen Schlitz (18), welcher auf der oberen Oberfläche oder der unteren Oberfläche jedes Behälters (3) ausgebildet ist, und wenigstens einen vorstehenden Körper (19), welcher jeweils auf der unteren oder oberen Oberfläche des gleichen Behälters ausgebildet ist, wobei der vorstehende Körper (19) eines Behälters dazu geeignet ist, in den Schlitz (18) eines anderen, mit diesem gestapelten Behälters einzugreifen.

17. Stromversorgungsbehälter (3) für eine unterbrechungsfreie Stromversorgung, mit
wenigstens einem ersten (4) und einem zweiten Satz (5) elektrischer Batterien, welche elektrisch mit einer unterbrechungsfreien Stromversorgung (1) gekoppelt werden können, und
wenigstens einem ersten elektronischen Anschlusselement (6) für den elektronischen Anschluss des ersten Satzes (4) und wenigstens einem zweiten Anschlusselement (7) für den elektronischen Anschluss des zweiten Satzes (5), um elektrische Energie, die von außerhalb ankommt und nach außen an die unterbrechungsfreie Stromversorgung (1) geleitet wird, zu übertragen,
wobei der erste Satz eine Mehrzahl von Batterien (4) umfasst, welche in Reihe mit dem ersten elektronischen Anschlusselement (6) verbunden sind, und der zweite Satz eine Mehrzahl von Batterien (5) umfasst, welche in Reihe mit dem zweiten elektronischen Anschlusselement (7) verbunden sind.

18. Behälter nach Anspruch 17, **dadurch gekennzeichnet, dass** die gesamte Potentialdifferenz über jeden Satz von Batterien (4, 5) im Wesentlichen kleiner als 50 V ist, wobei der erste (4) und zweite (5) Satz in der Lage ist, elektrisch miteinander in Reihe oder parallel verbunden zu werden, sobald sie mit der unterbrechungsfreien Stromversorgung (1) gekoppelt worden sind.

19. Behälter nach Anspruch 18, **dadurch gekennzeichnet, dass** die gesamte Potentialdifferenz über den ersten und zweiten Satz Batterien (4, 5) wesentlich höher als 50 V ist, wenn sie elektrisch miteinander verbunden sind.

## Revendications

1. Alimentation électrique sans coupure (1) pour l'accumulation et la fourniture de secours d'énergie électrique, comprenant :
une structure de support (2) pour une unité de transfert et de gestion de courant électrique, et
au moins un boîtier d'alimentation électrique (3), qui peut être associé à ladite structure de support (2) et qui est équipé d'au moins un premier jeu (4) et un deuxième jeu (5) de batteries électriques, qui peuvent être couplées électriquement à ladite unité, ledit boîtier (3) comprenant au moins un premier élément de connexion électronique (6) pour la connexion électronique dudit premier jeu (4) et au moins un deuxième élément de connexion électronique (7) pour la connexion électronique dudit deuxième jeu (5) afin de permettre une transmission d'énergie électrique à partir dudit boîtier (3),
dans laquelle ledit premier jeu comprend une pluralité de batteries (4) qui sont associées en série audit premier élément de connexion électronique (6), et ledit deuxième jeu comprend une pluralité de batteries (5) qui sont associées en série audit deuxième élément de connexion électronique (7), et
dans laquelle ladite structure de support (2) comprend au moins un premier (8) et un deuxième (9) port de transmission, qui sont connectés électriquement à ladite unité et qui sont aptes à assurer un couplage respectivement avec lesdits premier (6) et deuxième (7) éléments de connexion électronique pendant le montage dudit boîtier (3) sur ladite structure de support.

2. Alimentation électrique sans coupure (1) selon la revendication 1, **caractérisée en ce que** ladite unité comprend des moyens pour la connexion électronique desdits premier (8) et deuxième (9) ports de transmission, qui sont aptes à assurer la connexion électrique, en série ou en parallèle, desdits premier et deuxième jeux de batteries (4, 5) pendant le montage dudit boîtier (3) sur ladite structure de support (2).

3. Alimentation électrique sans coupure selon une ou plusieurs des revendications précédentes, **caractérisée en ce que** ledit boîtier (3) est équipé de cinq batteries, qui peuvent être réparties entre ledit premier jeu (4) et ledit deuxième jeu (5), lesdits moyens de connexion étant aptes à assurer la connexion électrique en série ou en parallèle desdits premier (4) et deuxième (5) jeux pendant le montage dudit boîtier (3) sur ladite structure de support (2).

4. Alimentation électrique sans coupure selon une ou plusieurs des revendications précédentes, **caractérisée en ce que** la différence de potentiel totale aux bornes de chaque jeu de batteries est sensiblement inférieure à 50 V.

5. Alimentation électrique sans coupure selon une ou plusieurs des revendications précédentes, **caractérisée en ce que** le couplage entre lesdits éléments de connexion électronique (6, 7) et lesdits ports de transmission (8, 9) est du type mâle-femelle, lesdits éléments de connexion électronique (6, 7) comprenant des parties mâles correspondantes et lesdits ports de transmission (8, 9) comprenant des parties femelles correspondantes, ou réciproquement.

6. Alimentation électrique sans coupure (1) selon une ou plusieurs des revendications précédentes, **caractérisée en ce qu'**elle comprend des moyens de butée et de centrage (11, 12) pour le montage dudit boîtier (3) sur ladite structure de support (2).

7. Alimentation électrique sans coupure selon la revendication 6, **caractérisée en ce que** lesdits moyens de butée et de centrage comprennent au moins une fente (11), qui est formée sur ledit boîtier (3) ou sur ladite structure de support (2), et au moins une broche (12), qui est associée à ladite structure de support (2) ou respectivement audit boîtier (3) et qui peut être insérée de manière sensiblement bien ajustée dans ladite fente (11).

8. Alimentation électrique sans coupure selon une ou plusieurs des revendications précédentes, **caractérisée en ce que** ledit boîtier (3) comprend des moyens de préhension (10).

9. Alimentation électrique sans coupure selon la revendication 8, **caractérisée en ce que** lesdits moyens de préhension comprennent au moins une poignée (10).

10. Alimentation électrique sans coupure (1) selon une ou plusieurs des revendications précédentes, **caractérisée en ce qu'**elle comprend une pluralité desdits boîtiers (3).

11. Alimentation électrique sans coupure selon la revendication 10, **caractérisée en ce que** lesdits éléments de connexion électronique (6, 7) sont mis en place sur un côté du boîtier correspondant (3).

12. Alimentation électrique sans coupure selon la revendication 10, **caractérisée en ce que** lesdits éléments de connexion électronique (6, 7) sont mis en place sur la surface inférieure (13) du boîtier correspondant (3).

13. Alimentation électrique sans coupure selon la revendication 12, **caractérisée en ce que** chacun (3) desdits boîtiers comprend au moins un premier (14) et un deuxième (15) port de transmission supplémentaire, qui sont mis en place sur la surface supérieure (17) dudit boîtier (3) et qui sont aptes à assurer un couplage respectivement avec les premier (6) et deuxième (7) éléments de connexion électronique d'un autre boîtier empilé sur le premier.

14. Alimentation électrique sans coupure selon la revendication 13, **caractérisée en ce que** le couplage entre lesdits éléments de connexion électronique (6, 7) et lesdits ports de transmission supplémentaires (14, 15) est du type mâle-femelle, lesdits éléments de connexion (6, 7) comprenant des parties mâles correspondantes et lesdits ports de transmission supplémentaires (14, 15) comprenant des parties femelles correspondantes, ou réciproquement.

15. Alimentation électrique sans coupure selon la revendication 10, **caractérisée en ce que** lesdits boîtiers (3) comprennent des moyens de couplage (18, 19) qui sont aptes à permettre leur empilement l'un sur l'autre.

16. Alimentation électrique sans coupure selon la revendication 15, **caractérisée en ce que** lesdits moyens de couplage comprennent au moins une fente (18), qui est formée sur la surface supérieure ou la surface inférieure de chaque boîtier (3), et au moins un corps en saillie (19), qui est formé respectivement sur la surface inférieure ou supérieure du même boîtier, le corps en saillie (19) d'un boîtier étant apte à s'engager dans la fente (18) d'un autre boîtier empilé sur lui.

17. Boîtier d'alimentation électrique (3) pour alimentations électriques sans coupure, comprenant :
au moins un premier jeu (4) et un deuxième jeu (5) de batteries électriques, qui peuvent être couplées électriquement à une alimentation électrique sans coupure (1), et
au moins un premier élément de connexion électronique (6) pour la connexion électronique dudit premier jeu (4), et au moins un deuxième élément de connexion électronique (7) pour la connexion électronique dudit deuxième jeu (5), pour la transmission de l'énergie électrique provenant de l'extérieur et redirigée de manière externe vers ladite alimentation électrique sans coupure (1),
dans lequel ledit premier jeu comprend une pluralité de batteries (4) qui sont associées en série audit premier élément de connexion électronique (6), et ledit deuxième jeu comprend une pluralité de batteries (5) qui sont associées en série audit deuxième élément de connexion électronique (7).

18. Boîtier selon la revendication 17, **caractérisé en ce que** la différence de potentiel totale aux bornes de chaque jeu de batteries (4, 5) est sensiblement inférieure à 50 V, lesdits premier (4) et deuxième (5) jeux étant aptes à être connectés électriquement l'un avec l'autre en série ou en parallèle une fois qu'ils ont été couplés à ladite alimentation électrique sans coupure (1).

19. Boîtier selon la revendication 18, **caractérisé en ce que** la différence de potentiel totale aux bornes desdits premier et deuxième jeux de batteries (4, 5), lorsque ceux-ci ont été connectés électriquement l'un à l'autre, est sensiblement supérieure à 50 V.
